(19) **Europäisches Patentamt**
**European Patent Office**
**Office européen des brevets**

(11) **EP 4 760 473 A1**

(12) **EUROPEAN PATENT APPLICATION**
published in accordance with Art. 153(4) EPC

(43) Date of publication:
**17.06.2026 Bulletin 2026/25**

(21) Application number: **24909686.8**

(22) Date of filing: **19.07.2024**

(51) International Patent Classification (IPC):
**G06F 3/04847** (2022.01)

(52) Cooperative Patent Classification (CPC):
**G06F 3/04847; G06F 3/0488; H04M 1/72454**

(86) International application number:
**PCT/CN2024/106583**

(87) International publication number:
**WO 2025/138732 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.12.2023 CN 202311868160**

(71) Applicant: **Honor Device Co., Ltd.**
**Shenzhen, Guangdong 518040 (CN)**

(72) Inventors:
• **ZHANG, Wenguang**
**Shenzhen, Guangdong 518040 (CN)**
• **GUO, Daoxin**
**Shenzhen, Guangdong 518040 (CN)**

(74) Representative: **Henselmann, Alexander Gerhard**
**Mitscherlich PartmbB**
**Karlstraße 7**
**80333 München (DE)**

(54) **DISPLAY CONTROL METHOD, ELECTRONIC DEVICE, AND STORAGE MEDIUM**

(57) This application provides a display control method, an electronic device, and a storage medium, and relates to the field of terminal technologies, so that a swiping strategy can be dynamically adjusted, thereby improving user experience. The method includes the following steps: The electronic device obtains a first proportion and a second proportion of a target page, where the first proportion is used to characterize a ratio of text content on the target page to all content on the target page, and the second proportion is used to characterize a ratio of image content on the target page to all the content on the target page; the electronic device determines, based on the first proportion and the second proportion, a target swiping strategy, where the target swiping strategy includes a target initial velocity gain coefficient and a target friction coefficient, the target initial velocity gain coefficient is positively correlated with the first proportion and negatively correlated with the second proportion, and the target friction coefficient is negatively correlated with the first proportion and positively correlated with the second proportion; and the electronic device controls, based on the target swiping strategy, swiping of the target page, in response to a release action following a swipe operation performed by a user on the target page.

FIG. 6

## Description

This application claims priority to Chinese Patent Application No. 202311868160.3, filed with the China National Intellectual Property Administration on December 29, 2023 and entitled "DISPLAY CONTROL METHOD, ELECTRONIC DEVICE, AND STORAGE MEDIUM", which is incorporated herein by reference in its entirety.

## TECHNICAL FIELD

This application relates to the field of terminal technologies, and in particular, to a display control method, an electronic device, and a storage medium.

## BACKGROUND

With development of electronic device technologies, a user may perform a swipe operation on a display of an electronic device such as a mobile phone, so that the display of the electronic device can scroll to display corresponding content. In some possible release fling scenarios, after the user lifts a finger to end a swipe operation performed on the display, a page displayed on the display continues swiping, based on a swipe velocity (that is, a release velocity) at which the user lifts the finger, for a distance before stopping. During swiping, content displayed on the page also changes correspondingly.

However, in the conventional technology, in a release fling scenario, an electronic device controls page swiping based on a single swipe curve or a swiping strategy, which cannot be applied to different use scenarios or display scenarios.

## SUMMARY

Embodiments of this application provide a display control method, an electronic device, and a storage medium that can dynamically adjust a swiping strategy based on different content displayed on a page, so that page swiping is more in line with an expectation of a user, thereby improving user experience.

To achieve the foregoing objective, the following technical solutions are used in the embodiments of this application.

According to a first aspect, an embodiment of this application provides a display control method applied to an electronic device. The method includes the following steps: the electronic device obtains a first proportion and a second proportion of a target page, where the first proportion is used to characterize a ratio of text content on the target page to all content on the target page, and the second proportion is used to characterize a ratio of image content on the target page to all the content on the target page; the electronic device determines, based on the first proportion and the second proportion, a target swiping strategy, where the target swiping strategy includes a target initial velocity gain coefficient and a target friction coefficient, the target initial velocity gain coefficient is positively correlated with the first proportion and negatively correlated with the second proportion, and the target friction coefficient is negatively correlated with the first proportion and positively correlated with the second proportion; and the electronic device controls, based on the target swiping strategy, swiping of the target page, in response to a release action following a swipe operation performed by a user on the target page.

Based on the technical solution provided in this application, the target swiping strategy for the electronic device to control swiping of the target page is determined based on ratios of text content and image content on the target page. In addition, the ratio of text content is positively correlated with the initial velocity gain coefficient and negatively correlated with the target friction coefficient, and the ratio of image content is negatively correlated with the initial velocity gain coefficient and positively correlated with the target friction coefficient. Therefore, the ratios of text content and image content on the target page directly affect an initial velocity, duration, and a distance for the electronic device to control, based on the target swiping strategy, swiping of the target page. Specifically, more text content causes a higher initial swipe velocity of the target page, and longer swipe duration, and more image content causes a lower initial swipe velocity of the target page, and longer swipe duration. In this way, the target swiping strategy for the electronic device to control swiping of the target page may be more in line with a use scenario in which the user views the target page, so that a swiping effect of the target page is more in line with an expectation of the user, thereby improving user experience.

In a possible design manner of the first aspect, that the electronic device obtains a first proportion and a second proportion of a target page includes: the electronic device obtains a view tree of the target page; the electronic device determines, based on feature information of leaf view nodes in the view tree, a first ratio of a sum of areas of corresponding views of all the leaf text view nodes to a total area of the target page, and a second ratio of a sum of areas of all the leaf image view nodes to the area of the target page, where the feature information includes an area and a type of a view corresponding to a view node, and the type includes a text view or an image view; the leaf view nodes are leaf nodes in the view tree, the leaf text view nodes are leaf nodes with the type of corresponding views being text views, and the leaf image view nodes are leaf nodes with the type of corresponding views being image views; and the electronic device uses the first ratio as the first proportion, and the second ratio as the second proportion.

Based on the foregoing design manner, the electronic device may obtain the first proportion and the second proportion of the target page based on the view tree corresponding to the target page. Based on the two proportions, the electronic device may subsequently obtain a target swiping strategy that best meets user requirements in a use scenario in which the user views the target page, thereby improving user experience.

In a possible design manner of the first aspect, that the electronic device obtains a first proportion and a second proportion of a target page includes: the electronic device obtains swipe history display data of the target page; and the electronic device determines, based on the swipe history display data, the first proportion and the second proportion of the target page.

Based on the foregoing design manner, because the swipe history display data can reflect ratios of text content and image content on the target page, the electronic device may determine, based on the swipe history display data, the first proportion and the second proportion of the target page. Based on the two proportions, the electronic device may subsequently obtain a target swiping strategy that best meets user requirements in a use scenario in which the user views the target page, thereby improving user experience.

In a possible design manner of the first aspect, that the electronic device determines, based on the swipe history display data of the target page, the first proportion and the second proportion of the target page includes: the electronic device obtains a third ratio and a fourth ratio of a first picture of each frame displayed by the electronic device during previous swiping of the target page, where the third ratio is a ratio of text content to all content, and the fourth ratio is a ratio of image content to all content; and the electronic device determines an average value of the third ratios of all the first pictures as the first proportion, and an average value of the fourth ratios of all the first pictures as the second proportion.

Based on the foregoing design manner, the electronic device may infer the first proportion and the second proportion of the target page by using the swipe history display data, that is, ratios of text content and image content in the first picture of each frame displayed by the electronic device during previous swiping of the target page. Based on the two proportions, the electronic device may subsequently obtain a target swiping strategy that best meets user requirements in a use scenario in which the user views the target page, thereby improving user experience.

In a possible design manner of the first aspect, that the electronic device determines, based on the swipe history display data of the target page, the first proportion and the second proportion of the target page includes: the electronic device obtains a third ratio and a fourth ratio of a second picture of each frame when the electronic device displays the target page at a current moment and in first preset duration prior to the current moment, where the third ratio is a ratio of text content to all content, and the fourth ratio is a ratio of image content to all content; and the electronic device determines an average value of the third ratios of all the first pictures as the first proportion, and an average value of the fourth ratios of all the first pictures as the second proportion.

Based on the foregoing design manner, the electronic device may infer the first proportion and the second proportion of the target page by using the swipe history display data, that is, ratios of text content and image content in the second picture of each frame when the electronic device displays the target page at the current moment and in the first preset duration prior to the current moment. Based on the two proportions, the electronic device may subsequently obtain a target swiping strategy that best meets user requirements in a use scenario in which the user views the target page, thereby improving user experience.

In a possible design manner of the first aspect, that the electronic device determines, based on the swipe history display data of the target page, the first proportion and the second proportion of the target page includes: the electronic device obtains a fifth ratio and a sixth ratio of historical content displayed on the target page during previous swiping of the target page, where the fifth ratio is a ratio of text content to the historical content, and the sixth ratio is a ratio of image content to the historical content; and the electronic device determines the fifth ratio as the first proportion, and the six ratio as the second proportion.

Based on the foregoing design manner, the electronic device may infer the first proportion and the second proportion of the target page by using the swipe history display data, that is, ratios of text content and image content in the historical content displayed on the target page during previous swiping of the target page. Based on the two proportions, the electronic device may subsequently obtain a target swiping strategy that best meets user requirements in a use scenario in which the user views the target page, thereby improving user experience.

In a possible design manner of the first aspect, that the electronic device determines, based on the swipe history display data of the target page, the first proportion and the second proportion of the target page includes: the electronic device obtains a fifth ratio and a sixth ratio of historical content displayed on the target page at a current moment and in first preset duration prior to the current moment, where the fifth ratio is a ratio of text content to the historical content, and the sixth ratio is a ratio of image content to the historical content; and the electronic device determines the fifth ratio as the first proportion, and the six ratio as the second proportion.

Based on the foregoing design manner, the electronic device may infer the first proportion and the second proportion of the target page by using the swipe history display data, that is, ratios of text content and image content in the historical content displayed on the target page at the current moment and in the first preset duration prior to the current moment. Based on the two proportions, the electronic device may subsequently obtain a target swiping strategy that best meets user requirements in a use scenario in which the user views the target page, thereby improving user experience.

In a possible design manner of the first aspect, that the electronic device determines, based on the first proportion and the second proportion, a target swiping strategy includes: the electronic device determines, based on the first proportion and the second proportion, a target initial velocity gain coefficient in the target swiping strategy according to a first preset formula; and the electronic device determines, based on the first proportion and the second proportion, a target friction coefficient in the target swiping strategy according to a second preset formula; where

the first preset formula is:

$$v = v_t * p_t + v_p * p_p;$$

where v is a target initial velocity gain, $v_t$ is a text initial velocity gain, $v_p$ is an image initial velocity gain, vt is greater than $v_p$, pt is the first proportion, and $p_p$ is the second proportion; and
the second preset formula is:

$$f = f_t * p_t + f_p * p_p;$$

where f is the target friction coefficient, ft is a text friction coefficient, $f_p$ is an image friction coefficient, and $f_p$ is greater than $f_t$.

Based on the foregoing design manner, a target initial velocity gain coefficient that is positively correlated with the first proportion and negatively correlated with the second proportion may be smoothly obtained; and a target friction coefficient that is negatively correlated with the first proportion and positively correlated with the second proportion may be obtained. In this way, a mobile phone may control, based on the target swiping strategy, a target page to achieve a swiping effect that is more in line with an expectation of a user.

According to a second aspect, an embodiment of this application further provides an electronic device. Functions of the electronic device may be implemented by hardware, or may be implemented by hardware by executing corresponding software. The hardware or the software includes one or more modules corresponding to the functions, for example, an obtaining module, a processing module, and a control module.

The obtaining module is configured to obtain a first proportion and a second proportion of a target page, where the first proportion is used to characterize a ratio of text content on the target page to all content on the target page, and the second proportion is used to characterize a ratio of image content on the target page to all the content on the target page. The processing module is configured to determine, based on the first proportion and the second proportion obtained by the obtaining module, a target swiping strategy, where the target swiping strategy includes a target initial velocity gain coefficient and a target friction coefficient; the target initial velocity gain coefficient is positively correlated with the first proportion and negatively correlated with the second proportion; and the target friction coefficient is negatively correlated with the first proportion and positively correlated with the second proportion. The control module is configured to control, based on the target swiping strategy determined by the processing module, swiping of the target page, in response to a release action following a swipe operation performed by a user on the target page.

According to a third aspect, this application provides an electronic device. The electronic device includes a display, a memory, and one or more processors. The display and the memory are coupled to the processor. The memory stores computer program code, the computer program code includes computer instructions, and when the computer instructions are executed by the processor, the electronic device is enabled to perform the display control method according to the first aspect or any one of the possible design manners of the first aspect.

According to a fourth aspect, this application provides a computer-readable storage medium. The computer-readable storage medium includes computer instructions, and when the computer instructions are run on an electronic device, the electronic device is enabled to perform the display control method according to the first aspect or any one of the possible design manners of the first aspect.

According to a fifth aspect, this application provides a computer program product. When the computer program product runs on an electronic device, the electronic device is enabled to perform the display control method according to the first aspect or any one of the possible design manners of the first aspect.

It may be understood that, for beneficial effects that can be achieved by the technical solutions provided in the second aspect to the fifth aspect provided above, reference may be made to the beneficial effects in the first aspect and any one of the possible design manners of the first aspect. Details are not described herein again.

**BRIEF DESCRIPTION OF DRAWINGS**

FIG. 1 is a schematic diagram of swipe curves according to an embodiment of this application;
FIG. 2 is a schematic diagram of changes in swipe curves according to an embodiment of this application;
FIG. 3 is a schematic diagram of swipe curves obtained from a human factors experiment according to an embodiment of this application;
FIG. 4 is a schematic diagram of a hardware architecture of an electronic device according to an embodiment of this application;
FIG. 5 is a schematic diagram of a software architecture of an electronic device according to an embodiment of this application;

FIG. 6 is a schematic flowchart 1 of a display control method according to an embodiment of this application;

FIG. 7A and FIG. 7B are a schematic flowchart 2 of a display control method according to an embodiment of this application;

FIG. 8 is a schematic diagram of a structure of a view tree according to an embodiment of this application;

FIG. 9 is a schematic flowchart 3 of a display control method according to an embodiment of this application;

FIG. 10 is a schematic flowchart 4 of a display control method according to an embodiment of this application;

FIG. 11 is a schematic flowchart 5 of a display control method according to an embodiment of this application;

FIG. 12 is a schematic flowchart 6 of a display control method according to an embodiment of this application;

FIG. 13 is a schematic diagram of a structure of an electronic device according to an embodiment of this application; and

FIG. 14 is a schematic diagram of a structure of a chip system according to an embodiment of this application.

## DESCRIPTION OF EMBODIMENTS

Terms used in the following embodiments of this application are merely intended to describe specific embodiments, but not intended to limit this application. As used in this specification and the claims of this application, singular expressions "one", "a", "the", "foregoing", and "this" are intended to include plural expressions, unless otherwise clearly specified in the context. It should be further understood that "/" represents a meaning of "or". For example, "A/B" may represent A or B. The term "and/or" in this specification describes only an association relationship for describing associated objects and represents that three relationships can exist. For example, "A and/or B" can represent the following three cases: Only A exists, both A and B exist, and only B exists.

An "embodiment" in this application means that a specific feature, structure, or characteristic described with reference to the embodiment may be included in at least one embodiment of this application. The term appearing at various locations in the specification does not necessarily refer to a same embodiment, or an independent or alternative embodiment mutually exclusive with another embodiment. A person skilled in the art explicitly and implicitly understands that the described embodiments in this application may be combined with another embodiment.

In the following embodiments of this application, the terms "first" and "second" are used only for description purposes, and cannot be construed as an implication or implication of relative importance or implicit indication of a quantity of indicated technical features. Therefore, features defined with "first" and "second" may explicitly or implicitly include one or more features. In the descriptions of the embodiments of this application, unless otherwise stated, "a plurality of" means two or more.

First, the terms involved in the embodiments of this application are described as follows.

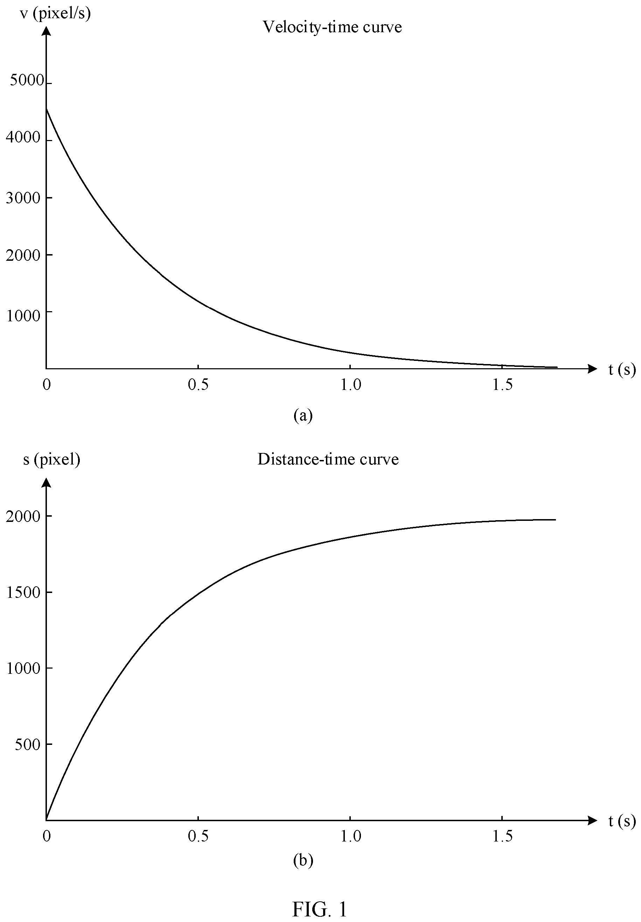

Swiping strategy (also referred to as a swipe curve strategy or a swipe processing strategy): The swiping strategy is specifically a strategy used by an operating system of an electronic device to control a specific process of page swiping (for example, control a swipe velocity, swipe time, and a swipe distance during page swiping) when a user performs a swipe operation on a touchscreen with a finger. That is, the electronic device may adjust, based on the swiping strategy, a page swiping effect during page swiping, so as to achieve a smoother and more natural swiping effect. In this way, user experience may be improved, and a swipe operation is smoother and more responsive. Specifically, in practice, the swiping strategy may be that the electronic device controls page swiping based on a preconfigured swipe curve. For example, swipe curves may specifically include a velocity-time curve as shown in (a) in FIG. 1 and a distance-time curve as shown in (b) in FIG. 1.

A swipe curve may be derived from a specific curve function (or referred to as a curve model), and the curve function may be a function that reflects a relationship among duration, a swipe velocity, and a swipe distance after a user lifts a finger. In the curve function, two most critical parameters may be an initial velocity gain coefficient (or referred to as a velocity gain coefficient) and a friction coefficient.

The initial velocity gain coefficient is mainly used to determine an initial page swipe velocity after the user lifts the finger after a swipe operation; and the friction coefficient is used to determine a rate at which the page swipe velocity decreases after the user lifts the finger after the swipe operation, so as to simulate a physical effect in a real implementation. A larger initial velocity gain coefficient causes a higher initial page swipe velocity; and a larger friction coefficient causes a faster decrease in the page swipe velocity.

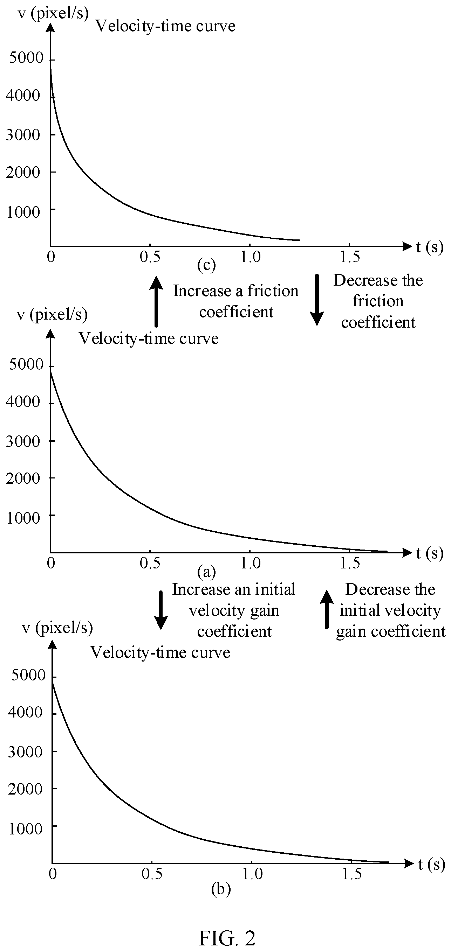

For example, if a velocity-time curve of a swipe curve is a curve shown in (a) in FIG. 2, the velocity-time curve becomes a curve shown in (b) in FIG. 2 if an initial velocity gain coefficient corresponding to the swipe curve is increased. Compared with the velocity-time curve shown in (a) in FIG. 2, in the velocity-time curve shown in (b) in FIG. 2, an initial page swipe velocity increases, and swipe duration required to end page swiping becomes longer, that is, duration required for the page swipe velocity to reach zero becomes longer.

If a friction coefficient corresponding to the swipe curve is increased, the velocity-time curve becomes a curve shown in (c) in FIG. 2. Compared with the velocity-time curve shown in (a) in FIG. 2, in the velocity-time curve shown in (c) in FIG. 2, an initial page swipe velocity remains unchanged, and swipe duration required to end page swiping becomes shorter.

Similarly, if the initial velocity gain coefficient corresponding to the swipe curve is reduced, a change in the velocity-time curve may be similar to a change from (b) in FIG. 2 to (a) in FIG. 2; and if the friction coefficient corresponding to the swipe curve is reduced, a change in the velocity-time curve may be similar to a change from (c) in FIG. 2 to (a) in FIG. 2.

In addition, when the initial velocity gain coefficient corresponding to the swipe curve is increased, both a swipe distance and swipe duration in the distance-time curve increase; when the friction coefficient corresponding to the swipe curve is increased, both the swipe distance and the swipe duration in the distance-time curve decrease; when the initial velocity gain coefficient corresponding to the swipe curve is reduced, both the swipe distance and the swipe duration in the distance-time curve are reduced; and when the friction coefficient corresponding to the swipe curve is reduced, both the swipe distance and the swipe duration in the distance-time curve increase.

In practice, in a fling scenario, a mobile phone controls page swiping based on a swipe curve, which is essentially switching of multiple frames of pictures. Specifically, after the user performs a release action, the mobile phone determines, based on the swipe curve, a required page swipe distance currentDisance and a swipe velocity currentVelocity in each preset duration. After that, the mobile phone may determine, based on the currentDisance, content to be displayed on the next frame of picture, then draw and display the content. When the determined currentVelocity is less than a set threshold, the entire swiping process ends. The preset duration is related to a refresh rate when the mobile phone displays a page. For example, if the refresh rate is 120 Hz, the preset duration may be 8.3 ms.

View tree (view tree): In practice, an entire region of a page to be displayed by an application (usually larger than a region that may be displayed on a display at a time) may be divided into a plurality of sub-regions based on content on the page or a specific rule, and each sub-area may be referred to as one view node. When an application in an electronic device draws a page, a view tree composed of all view nodes (view nodes) in the entire page is generated based on a preconfigured layout file and a view hierarchy. The layout file defines information such as layout of the page, and a location, area, and a type of each view node, and the view hierarchy describes a parent-child relationship among the view nodes. The finally generated view tree may include location information, area and content categories (or types) of views corresponding to all view nodes, and a child node list of the view nodes.

With development of electronic device technologies, a user may perform a swipe operation on a display of an electronic device such as a mobile phone, so that the display of the electronic device can scroll to display corresponding content. In a release fling scenario, after the user performs a swipe operation, a page displayed on the display continues swiping, based on a release velocity, for a distance before stopping. In the conventional technology, in a release fling scenario, an electronic device controls page swiping based on a single swiping strategy or a swipe curve.

However, in an actual use scenario of a user, pages displayed on a display have various use scenarios, such as a text-only scenario, an image-only scenario, and an image-text scenario. A text-only scenario is a scenario in which all or approximately all content displayed on a page is text, for example, an e-book page or a contact page. An image-only scenario may be a scenario in which all or approximately all content displayed on a page is images, for example, a gallery display page. An image-text scenario may be a scenario in which content displayed on a page is a mixture of text and images, for example, a Taobao® shopping page, or a Weibo® page. In this embodiment of this application, the images may include pictures and videos.

In different use scenarios, a user has different expectations for page swiping after the user lifts the finger. From a human factors experiment (which may be understood as a questionnaire-like survey experiment), it may be concluded that: for a text-only scenario, a user tends to swipe quickly and stop slowly; for an image-only scenario, the user tends to swipe slowly and stop quickly; and for an image-text scenario, the user tends to swipe slowly and stop slowly. Here, "swipe quickly and slowly" refers to a page swipe velocity when the user lifts the finger. "Swipe quickly" corresponds to a high page swipe velocity, and "swipe slowly" corresponds to a low page swipe velocity. "Stop quickly and slowly" refers to swipe duration after the user lifts the finger. "Stop quickly" corresponds to short page swipe duration, and "stop slowly" corresponds to long page swipe duration.

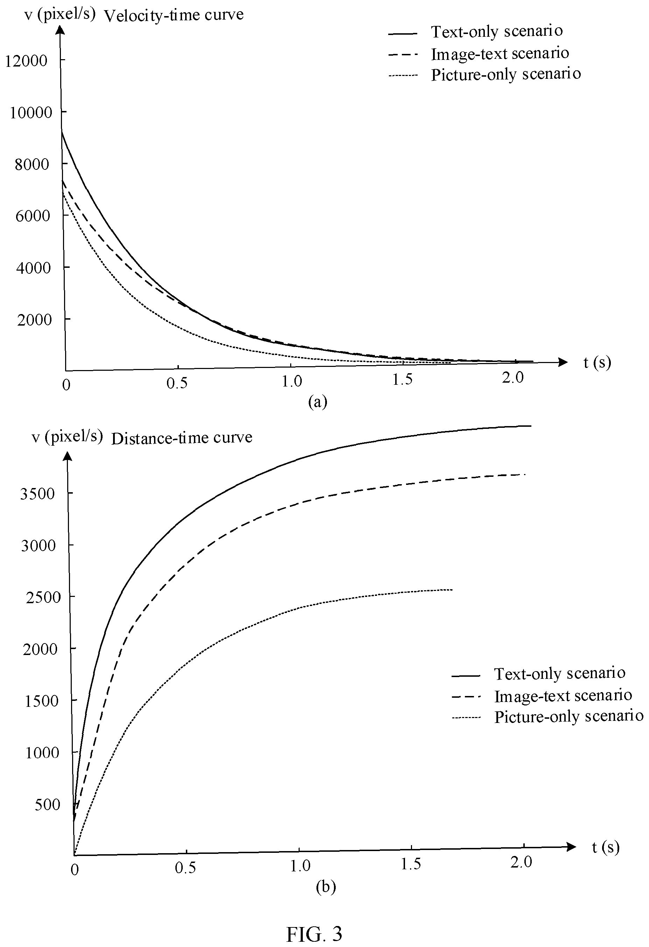

For example, referring to (a) in FIG. 3, it may be learned that in a text-only scenario, an initial page swipe velocity is the highest, and swipe time is the longest; in an image-only scenario, an initial page swipe velocity is the lowest, and swipe time is the shortest; and in an image-text scenario, an initial page swipe velocity is moderate, and swipe time is relatively long.

Referring to (b) in FIG. 3, it may be learned that in a text-only scenario, page swipe time is the longest, and a swipe distance is the longest with a fastest change; in an image-only scenario, page swipe time is the shortest, and a swipe distance is the shortest with a slowest change; and in an image-text scenario, page swipe time is relatively long, and a swipe distance is relatively long with a relatively fast change.

To sum up, it may be concluded that in a fling scenario, when there are more images on a page, the user is more prone to a slower swipe velocity and shorter swipe duration. When there is more text on the page, the user is prone to a higher swipe velocity and a longer trail.

Based on this, in an existing release fling scenario, a swiping strategy or a swipe curve used by an electronic device to control page swiping cannot be well used in different use scenarios, so that user requirements cannot be well met, and user experience is not good enough.

To resolve the foregoing problem, an embodiment of this application provides a display control method applied to an electronic device. In this technical solution, the electronic device may first obtain a first proportion and a second proportion of a target page. The first proportion is used to characterize a ratio of text content on the target page to all content on the target page, and the second proportion is used to characterize a ratio of image content on the target page to all the content on the target page. The target page may be a page currently displayed or a page to be displayed by the electronic device. In this application, the image content may be a picture or a video.

Then, the electronic device may determine, based on the first proportion and the second proportion, a target swiping strategy. The target swiping strategy may include a target initial velocity gain coefficient and a target friction coefficient. A higher first proportion causes a larger initial velocity gain coefficient and a smaller target friction coefficient; and a higher second proportion causes a smaller initial velocity gain coefficient and a larger target friction coefficient. That is, the target initial velocity gain coefficient is positively correlated with the first proportion and negatively correlated with the second proportion; and the target friction coefficient is negatively correlated with the first proportion and positively correlated with the second proportion.

Then, the electronic device may control, based on the target swiping strategy, swiping of the target page, in response to a release action following a swipe operation performed by a user on the target page.

In this application, the target swiping strategy for controlling swiping of the target page is determined based on ratios of text content and image content on the target page. In addition, the ratio of text content is positively correlated with the initial velocity gain coefficient and negatively correlated with the target friction coefficient, and the ratio of image content is negatively correlated with the initial velocity gain coefficient and positively correlated with the target friction coefficient. Therefore, the ratios of text content and image content on the target page directly affect an initial velocity, duration, and a distance for the electronic device to control, based on the target swiping strategy, swiping of the target page. Specifically, more text content causes a higher initial swipe velocity of the target page, and longer swipe duration, and more image content causes a lower initial swipe velocity of the target page, and longer swipe duration. In this way, the target swiping strategy for the electronic device to control swiping of the target page may be more in line with a use scenario in which the user views the target page, so that a swiping effect of the target page is more in line with an expectation of the user, thereby improving user experience.

The technical solutions provided in the embodiments of this application are described below in detail with reference to the accompanying drawings.

The technical solutions provided in this application may be applied to an electronic device. In some embodiments, the electronic device may be a mobile phone, a tablet computer, a handheld computer, a personal computer (personal computer, PC), an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device and/or a smart city device. A specific type of the electronic device is not specifically limited in the embodiments of this application.

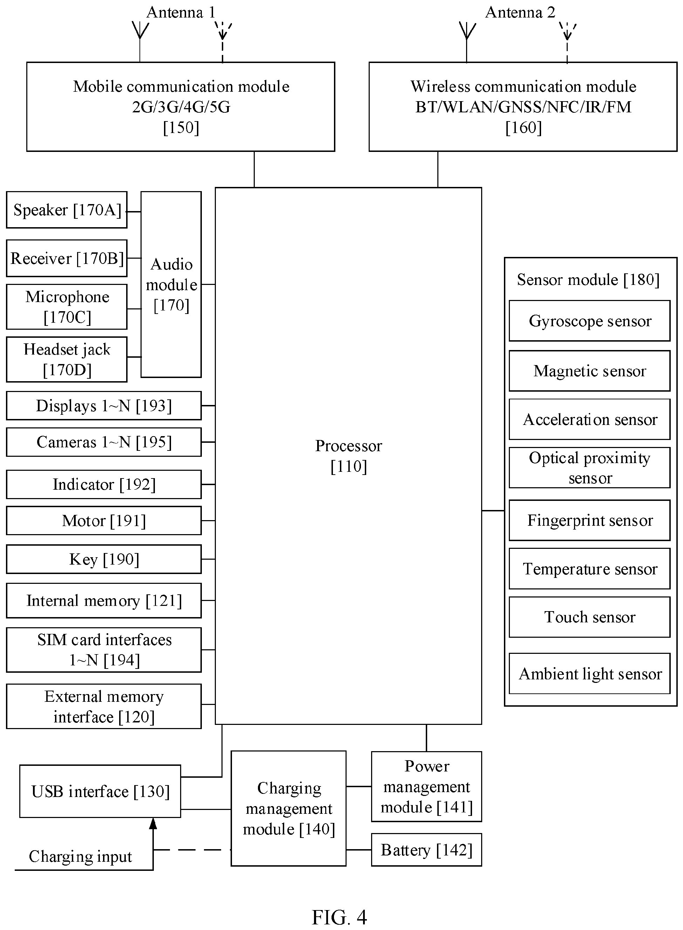

For example, the electronic device is a mobile phone. FIG. 4 is a schematic diagram of a structure of an electronic device according to an embodiment of this application.

As shown in FIG. 4, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a display 193, a subscriber identification module (subscriber identification module, SIM) card interface 194, a camera 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a power supply device (such as a charger or notebook power). The charger may be a wireless charger, or may be a wired charger. In some embodiments of wired charging, the charging management module 140 may receive a charging input from a wired charger through the USB interface 130. In some embodiments of wireless charging, the charging management module 140 may receive wireless charging input by using a wireless charging coil of the electronic device.

When charging the battery 142, the charging management module 140 may further supply power to the electronic device through the power management module 141. The battery 142 may specifically be composed of a plurality of batteries connected in series. The power management module 141 is configured to connect the battery 142, the charging management module 140, and the processor 110.

The power management module 141 is configured to connect the battery 142, the charging management module 140, and the processor 110. The power management module 141 receives an input from the battery 142 and/or the charging management module 140, and supplies power to the processor 110, the internal memory 121, the display 193, the camera 195, the wireless communication module 160, and the like. The power management module 141 may be further configured to monitor parameters such as a battery voltage, current, a quantity of battery cycles, and a battery health status (leakage or impedance). In some other embodiments, the power management module 141 may alternatively be disposed in the processor 110.

The external memory interface 120 may be configured to connect to an external non-volatile memory, to expand a storage capability of the electronic device. The external non-volatile memory communicates with the processor 110 by using the external memory interface 120, to implement a data storage function. For example, files such as music and a video are stored in the external non-volatile memory.

The internal memory 121 may include one or more random access memories (random access memory, RAM) and one or more non-volatile memories (non-volatile memory, NVM). The processor 110 may directly read from or write into the random access memory. The random access memory may be configured to store an executable program (for example, a machine instruction) of an operating system or another running program, and may be further configured to store data of a user and data of an application, and the like. The non-volatile memory may also store the executable program, the data of the user, and the data of the application, and the like, which may be loaded into the random access memory in advance for directly reading and writing by the processor 110.

The touch sensor is also referred to as a "touch control device". The touch sensor may be disposed on the display 193. The touch sensor and the display 193 constitute a touchscreen, which is also referred to as a "touch control screen". The touch sensor is configured to monitor a touch operation performed on or near the touch sensor. The touch sensor may transfer the monitored touch operation to the application processor to determine a type of a touch event. A visual output related to the touch operation may be provided by using the display 193. In some other embodiments, the touch sensor may alternatively be disposed on a surface of the electronic device at a position different from that of the display 193.

The ambient light sensor is configured to sense ambient light brightness. For example, the ambient light sensor may measure light intensity of four channels of ambient light. The ambient light sensor outputs the measured light intensity of the four channels of ambient light to the processor 110. The processor 110 may process the light intensity of the four channels of ambient light output by the ambient light sensor to obtain light intensity of ambient light. In a screen-on state, the electronic device may adaptively adjust brightness of the display based on the obtained light intensity of ambient light.

The pressure sensor is configured to sense a pressure signal, and may convert the pressure signal into an electrical signal. In some embodiments, the pressure sensor may be disposed on the display 193. There are many types of pressure sensors, such as a resistive pressure sensor, an inductive pressure sensor, and a capacitive pressure sensor. When a touch operation is performed on the display 193, the electronic device monitors intensity of the touch operation by using the pressure sensor. The electronic device may also calculate a touch location based on a monitored signal of the pressure sensor. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

In some embodiments, the electronic device may include 1 or N cameras 195, where N is a positive integer greater than 1. In this embodiment of this application, types of the cameras 195 may be distinguished based on hardware configuration and a physical position. For example, a camera disposed on a side on which the display 193 of the electronic device is located may be referred to as a front-facing camera, and a camera disposed on a side on which a rear cover of the electronic device is located may be referred to as a rear-facing camera. For another example, a camera with a short focal length and a larger angle of view may be referred to as a wide-angle camera, and a camera with a long focal length and a small angle of view may be referred to as a common camera. The focal length and the angle of view are relative concepts with no specific parameter limitations. Therefore, the wide-angle camera and the common camera are also relative concepts, and may be specifically distinguished based on physical parameters such as the focal length and the angle of view.

The electronic device implements a display function by using the GPU, the display 193, the application processor, and the like. The GPU is a microprocessor for image editing and is connected to the display 193 and the application processor. The GPU is configured to perform mathematical and geometric computing for graphics rendering. The processor 110 may include one or more GPUs that execute program instructions to generate or change display information.

The electronic device may implement a photographing function by using the ISP, the camera 195, the video codec, the GPU, the display 193, the application processor, and the like. The GPU is configured to perform mathematical and geometric computing for graphics rendering. The processor 110 may include one or more GPUs that execute program instructions to generate or change display information. In this embodiment of this application, a function of the GPU is used during frame drawing of each image frame, so that a finally displayed picture achieves a better display effect and performance.

The ISP is configured to process data fed back by the camera 195. For example, during photographing, a shutter is pressed, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise and brightness of the image. The ISP may further optimize parameters such as exposure and a color temperature of a photographing scene. In some embodiments, the ISP may be disposed in the camera 195. The camera 195 is configured to capture a still image or a video.

The digital signal processor is configured to process a digital signal, and may further process another digital signal in addition to the digital image signal. For example, when the electronic device selects a frequency, the digital signal processor is configured to perform Fourier transform or the like on frequency energy.

The display 193 is configured to display an image, a video, or the like. The display 193 includes a display panel. The display panel may be a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device may include 1 or N displays 193, where N is a positive integer greater than 1.

In this embodiment of this application, the display 193 may be configured to display a page (for example, a target page) to be viewed by the user.

A wireless communication function of the electronic device may be implemented by using the antenna 1, the antenna 2, the mobile communication module 150, the wireless communication module 160, a modem, the baseband processor, and the like.

The antenna 1 and the antenna 2 are configured to transmit and receive electromagnetic wave signals. Each antenna in the electronic device may be configured to cover one or more communication bands. Different antennas may be further multiplexed to improve antenna utilization.

The mobile communication module 150 may provide a solution applied to the electronic device for wireless communication including 2G/3G/4G/5G and the like. The mobile communication module 150 may receive an electromagnetic wave by using the antenna 1, perform processing such as filtering or amplification on the received electromagnetic wave, and transmit a processed electromagnetic wave to a modem processor for demodulation. The mobile communication module 150 may further amplify a signal obtained after modulation by the modem processor, and convert, through the antenna 1, an amplified signal into an electromagnetic wave for radiation. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low frequency baseband signal into a medium or high frequency signal. The demodulator is configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor and then transferred to the application processor. The application processor outputs a sound signal by using an audio device (not limited to a speaker 170A or a receiver 170B), or displays an image or a video by using the display 193. In some embodiments, the modem processor may be an independent device. In some other embodiments, the modem processor may be independent of the processor 110 and disposed in a same device as the mobile communication module 150 or another functional module.

The wireless communication module 160 may provide a wireless communication solution including a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like applied to the electronic device. The wireless communication module 160 may be one or more devices integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert, through the antenna 2, the to-be-sent signal into an electromagnetic wave for radiation.

The SIM card interface 194 is configured to connect to a SIM card. The SIM card may be inserted into the SIM card interface 194 or removed from the SIM card interface 194 to implement contact with and separation from the electronic device. The electronic device may support one or more SIM card interfaces. The SIM card interface 194 may support a Nano SIM card, a Micro SIM card, a SIM card, and the like. A plurality of cards may be simultaneously inserted into a same SIM card interface 194. The SIM card interface 194 may also be compatible with an external memory card. The electronic device interacts with a network by using a SIM card, to implement functions such as a call and data communication.

One SIM card corresponds to one subscriber number.

It may be understood that an interface connection relationship between the modules illustrated in this embodiment of the present invention is an example for description, and does not constitute a limitation on the structure of the electronic device. In some other embodiments of this application, the electronic device may alternatively use an interface connection manner different from that in the foregoing embodiment, or use a combination of a plurality of interface connection manners.

Certainly, it may be understood that FIG. 4 shows merely an example description when a form of the electronic device is a mobile phone. If the electronic device is in another device form such as a tablet computer, a handheld computer, a PC, a PDA, or a wearable device (for example, a smartwatch or a smart band), the structure of the electronic device may include fewer structures than those shown in FIG. 4 or may include more structures than those shown in FIG. 4. This is not limited herein.

It may be understood that a function of the electronic device usually needs to be implemented based on cooperation of software in addition to support of hardware. A software system of the electronic device may use a layered architecture, an event-driven architecture, a microkernel architecture, a microservice architecture, or a cloud architecture. In this embodiment of this application, an Android® system with the layered architecture is used as an example to describe a software structure of the electronic device.

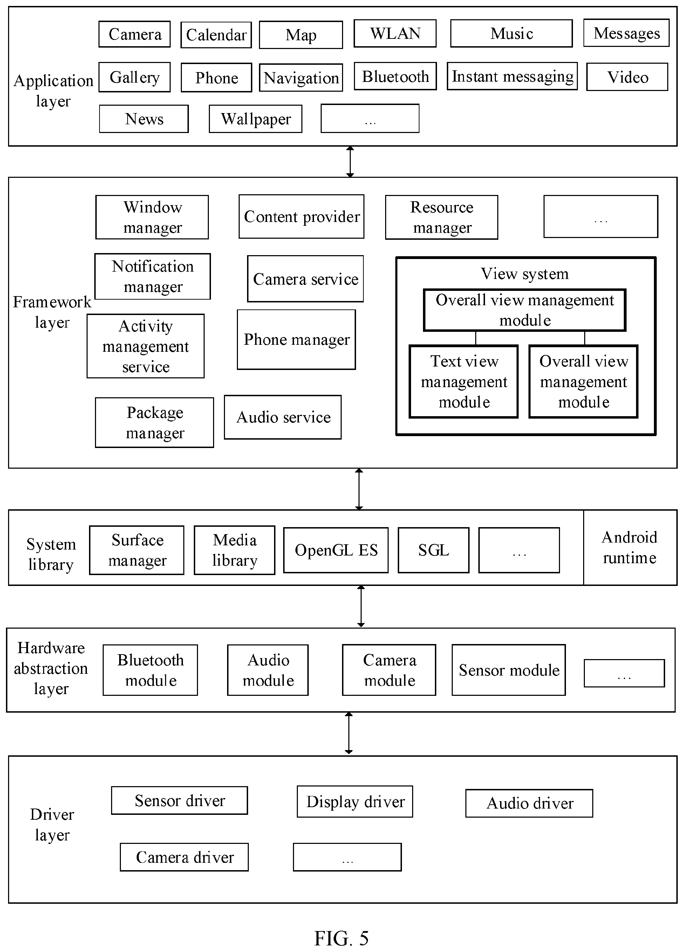

FIG. 5 is a schematic diagram of a layered architecture of a software system of an electronic device according to an embodiment of this application. In the layered architecture, software is divided into several layers, and each layer has a clear role and task. The layers communicate with each other by using a software interface (for example, API).

In some examples, referring to FIG. 5, in this embodiment of this application, software of an electronic device is divided into five layers from top to bottom: an application layer, a framework layer (or referred to as an application framework layer), system library and Android runtime (android runtime), a hardware abstraction layer (hardware abstraction layer, HAL), and a driver layer (or referred to as a kernel layer). The system library and the Android runtime may also be referred to as a local framework layer or a native layer.

The application layer may include a series of applications. As shown in FIG. 5, the application layer may include applications (application, APP) such as Camera, Gallery, Calendar, Map, WLAN, Bluetooth, Music, Video, Messages, Phone, Navigation, Instant Messaging, Gallery, News, and Wallpaper.

The framework layer provides an application programming interface (application programming interface, API) and a programming framework for the applications at the application layer. The application framework layer includes some predefined functions or services. For example, the application framework layer may include an activity manager, a window manager, a content provider, an audio service, a view system, a phone manager, a resource manager, a notification manager, a package manager, and the like. This is not limited in this embodiment of this application.

The window manager is configured to manage a window program. The window manager may obtain a display size, determine whether there is a status bar, lock a screen, take a screenshot, and the like.

The content provider is configured to store and obtain data, and enable the data to be accessible to an application. The data may include a video, an image, audio, calls that are made and answered, browsing history and bookmarks, a phone book, and the like.

The view system is mainly configured to construct and manage a user interface of the application. The view system includes visual controls such as a text display control and an image display control. The view system may be configured to construct a display interface or a page of an application. The display interface may include one or more views. For example, a display interface including an SMS notification icon may include a text display view and an image display view.

The view system provides a series of classes and interfaces for creating, laying out and displaying views (View), and handling user interaction events. The view system is also responsible for managing lifecycles, drawing and rendering of views, and interacting with another component such as Activity (Activity) or Service (Service).

Before drawing a page, the view system constructs, based on a layout file and a view hierarchy that are predefined by an application, a view tree composed of a plurality of view nodes. Specifically, the view system may include an overall view management module (for example, a listview module), a text view management module (for example, a textview module), and an image view management module (for example, an imageview module). The text view management module is configured to manage all text views (views including only text) on a page to be displayed by the electronic device, and the image view management module is configured to manage all image views (views including only images) on a page to be displayed by the electronic device. The overall view management module may obtain, from the text view management module and the image view management module, information about all the text views and the image views on the page to be displayed by the electronic device, and then construct a view tree with reference to a predefined layout file and a predefined view hierarchy. Each view node in the view tree represents one view, for example, a text view node in the view tree represents a text view, and an image view node represents an image view.

In this embodiment of this application, the overall view management module is further configured to determine, based on the view tree, a ratio of text views on a page to be displayed by the electronic device to all views on the entire page (that is, a ratio of a region in which text content on the page to be displayed by the electronic device is located to all regions of the page), and a ratio of all image views to all views on the entire page (that is, a ratio of a region in which picture content on the page to be displayed by the electronic device is located to all regions of the page). Specifically, the overall view management module may obtain information about all leaf view nodes from the view tree, and determine, based on the information about the leaf view nodes, a ratio of areas of text view nodes among the leaf view nodes to a sum of areas of all leaf view nodes, and a ratio of areas of picture view nodes among the leaf view nodes to a sum of areas of all leaf view nodes.

The phone manager is configured to provide a communication function of the electronic device, for example, the phone manager may manage a call status (including initiating, answering, hanging up, or the like) of a call application.

The resource manager provides various resources, for example, a localized string, an icon, a picture, a layout file, and a video file, for an application.

The notification manager enables an application to display notification information in the status bar, and may be configured to convey a notification-type message. The displayed notification information may automatically disappear after a short stay without user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on a screen in a form of a dialog window. For example, text information is prompted in the status bar, an alert tone is made, the electronic device vibrates, and an indicator light blinks.

The package manager is configured to manage application packages in an Android® system. The package manager enables an application to obtain detailed information about installed applications and their services, permissions, and the like. The package manager is further configured to manage events such as installation, uninstallation, and upgrade of an application.

The system library may include a plurality of functional modules, for example, a surface manager (surface manager), a media library (Media Libraries), an open graphics library embedded system (Open Graphics Library Embedded Systems, OpenGL ES), and a simple graphics library (Simple Graphics Library, SGL). The surface manager is configured to manage a display subsystem, and provide fusion of 2D and 3D layers for a plurality of applications. The media library supports playback and recording in a plurality of common audio and video formats, a still image file, and the like. The media library may support a plurality of audio and video coding formats, for example, MPEG4, H.264, MP3, AAC, AMR, JPG, and PNG. The OpenGL ES is configured to implement three-dimensional graphics drawing, image rendering, composition, layer processing, and the like. The SGL is a drawing engine for 2D drawing.

The Android runtime (android runtime) includes a kernel library and an ART virtual machine. The android runtime is responsible for scheduling and management of an Android system. The kernel library includes two parts: One part is a functional function that needs to be invoked in a java language, and the other part is a kernel library of Android. The application layer and the application framework layer run on the ART virtual machine. The ART virtual machine executes java files at the application layer and the application framework layer as binary files. The ART virtual machine is configured to perform functions such as object lifecycle management, stack management, thread management, security and exception management, and garbage collection.

The HAL is an interface layer between an operating system kernel and a hardware circuit, and is intended to abstract hardware. The HAL hides hardware interface details of a specific platform, provides a virtual hardware platform for an operating system, and makes the operating system hardware-independent and portable on a plurality of platforms. The HAL provides a standard interface to display a device hardware function to a higher-level Java API framework (that is, the framework layer). The HAL includes a plurality of library modules. Each module implements one interface for a specific type of hardware components, for example, an audio HAL audio module, a Bluetooth HAL Bluetooth module, a camera HAL camera module (which may also be referred to as a camera HAL or a camera hardware abstraction module), and a sensors HAL sensor module (or referred to as an Isensor service, sensor service).

The driver layer is a layer between hardware and software. The driver layer includes at least a display driver, a camera driver, an audio driver, a sensor driver, a battery driver, and the like. This is not limited in this application. The sensor driver may specifically include a driver of each sensor included in the electronic device, for example, a driver of an ambient light sensor. For example, the driver of the ambient light sensor may send detection data from the ambient light sensor to a sensor module in time in response to an instruction or a command of the sensor module to obtain the detection data.

The technical solution provided in this embodiment of this application can be implemented in an electronic device having the foregoing hardware architecture or software architecture.

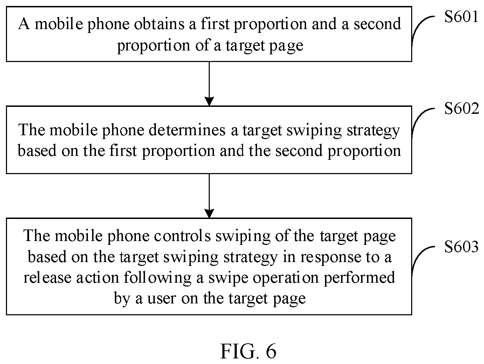

Based on the foregoing hardware architecture shown in FIG. 4 and the software architecture shown in FIG. 5, the following describes a display control method provided in an embodiment of this application with reference to FIG. 6. FIG. 6 is a schematic flowchart of a display control method according to an embodiment of this application. Referring to FIG. 6, for example, an electronic device is a mobile phone, and then the display control method may include S601-S603.

S601: The mobile phone obtains a first proportion and a second proportion of a target page.

In this embodiment of this application, the target page may be a page that may be displayed by any application in the mobile phone, and the target page may be a page that is currently displayed by the mobile phone, or the target page may be a page that is to be displayed by the mobile phone. The first proportion is used to characterize a ratio of text content on the target page to all content on the target page, and the second proportion is used to characterize a ratio of image content on the target page to all the content on the target page. A sum of the first proportion and the second proportion is 1.

A main objective of the display control method provided in this application is to enable the mobile phone to control swiping of the target page by using a swiping strategy that is more in line with a current use scenario in which a user views the target page after the user performs a swipe operation and lifts a finger. Therefore, the mobile phone first needs to obtain proportions of text content and image content on the target page, and then determines a suitable swiping strategy based on the two proportions.

In this embodiment of this application, the mobile phone may obtain the first proportion and the second proportion in the following two scenarios.

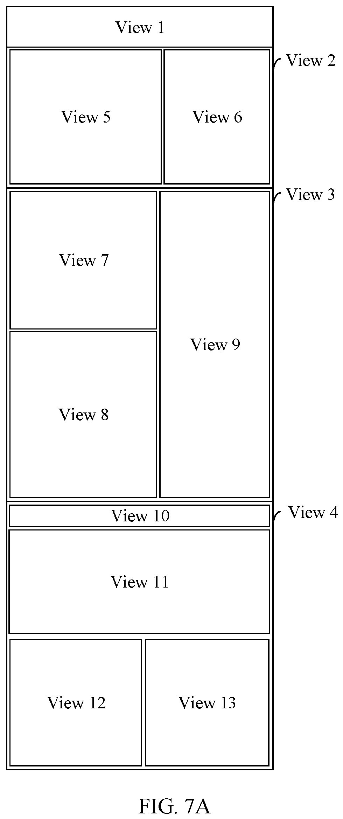

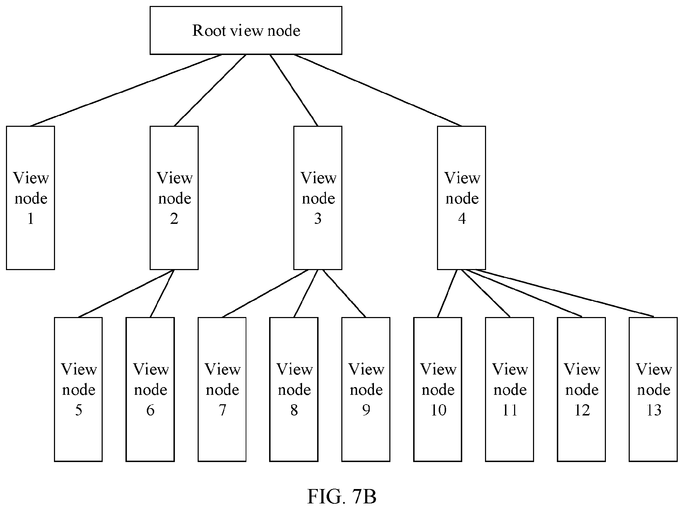

In a first possible scenario, if the target page is a page to be displayed by the mobile phone (which may be specifically a page of any application in the mobile phone), a view system in the mobile phone may generate a view tree corresponding to the target page when the target page is drawn by the mobile phone. The view tree may include all view nodes on the target page. For example, if a complete target page is a page shown in FIG. 7A, the view tree may be shown in FIG. 7B. It should be noted that the target page shown in FIG. 7A is only an illustration of content of the entire page. In practice, if a display size of the mobile phone is less than area of the target page, the mobile phone can only display a portion of the target page at a time when displaying the target page, rather than the entire target page.

A root view node represents an entire target page, a view node 1 represents a view 1, a view node 2 represents a view 2, a view node 3 represents a view 3, a view node 4 represents a view 4, a view node 5 represents a view 5, a view node 6 represents a view 6, a view node 7 represents a view 7, a view node 8 represents a view 8, a view node 9 represents a view 9, a view node 10 represents a view 10, a view node 11 represents a view 11, a view node 12 represents a view 12, and a view node 13 represents a view 13. The view node 5 and the view node 6 are child nodes of the view node 2; the view node 7, the view node 8, and the view node 9 are child nodes of the view node 3; and the view node 10, the view node 11, the view node 12, and the view node 13 are child nodes of the view node 4.

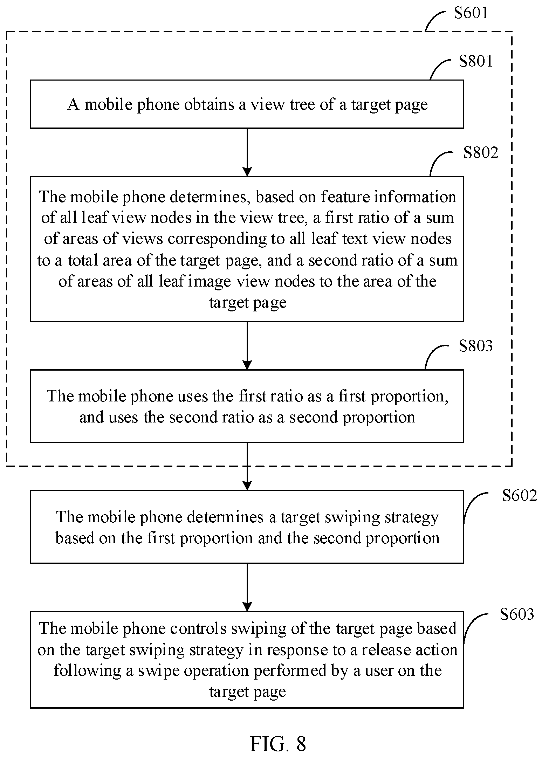

Information, such as sizes, types, and positions, about view nodes corresponding to all views on the target page is described in the view tree. Therefore, the mobile phone may obtain, based on information about all leaf nodes (which may be referred to as leaf view nodes) in the view tree, area ratios of text views and image views on the target page. Based on this, in a possible implementation, with reference to FIG. 6, referring to FIG. 8, S601 may specifically include S801-S803.

S801: The mobile phone obtains a view tree of the target page.

The view tree of the target page includes feature information of all view nodes on the target page, and each view node represents one view on the target page. The feature information may include areas (or may be referred to as sizes, dimensions, or the like) and types of the views corresponding to the view nodes. The types may include text views or image views. Certainly, in practice, the feature information may further include content such as positions of the views corresponding to the view nodes, a parent-child relationship among different view nodes, and the like. This is not specifically limited in this application.

S802: The mobile phone determines, based on feature information of all leaf view nodes in the view tree, a first ratio of a sum of areas of views corresponding to all leaf text view nodes to a total area of the target page, and a second ratio of a sum of areas of all leaf image view nodes to the area of the target page.

All leaf view nodes in the view tree are all leaf nodes in the view tree, the leaf text view nodes are leaf view nodes with the type of corresponding views being text views, and the leaf image view nodes are leaf view nodes with the type of corresponding views being image views. The views corresponding to all the leaf view nodes are all views divided at a minimum granularity on the target page. Therefore, a sum of areas of the views corresponding to all the leaf view nodes is the total area of the target page.

Similarly, a sum of areas of the views corresponding to all the leaf text view nodes is a sum of areas of all text views on the target page; and a sum of areas of the views corresponding to all the leaf image view nodes is a sum of areas of all image views on the target page.

The mobile phone may calculate the first ratio by using the sum of the areas of the views corresponding to all the leaf text view nodes and the sum of the areas of the views corresponding to all the leaf view nodes; and calculate the second ratio by using the sum of the areas of the views corresponding to all the leaf image view nodes and the sum of the areas of the views corresponding to all the leaf view nodes.

Further, the first ratio may be considered as a ratio of a sum of areas of all text views on the target page to the total area of the target page, that is, the first ratio may represent a ratio of text content on the target page to all content on the target page, that is, the first ratio may be equal to the first proportion. Similarly, the second ratio may be considered as a ratio of a sum of areas of all image views on the target page to the total area of the target page, that is, the first ratio may represent a ratio of image content on the target page to all content on the target page, that is, the second ratio may be equal to the second proportion. Based on this, the mobile phone may use the first ratio as the first proportion, and use the second ratio as the second proportion, that is, perform S6013.

S803: The mobile phone uses the first ratio as the first proportion, and uses the second ratio as the second proportion.

Based on the technical solution corresponding to S801-S803, the mobile phone may obtain, based on the view tree corresponding to the target page, the first proportion and the second proportion of the target page. Based on the two proportions, the mobile phone may subsequently obtain a target swiping strategy that best meets user requirements in a use scenario in which the user views the target page, thereby improving user experience.

In a second possible scenario, if the target page is a page currently displayed by the mobile phone (which may be specifically a page being displayed by any application in the mobile phone), and in addition, distribution of text content and image content on a page is regular, that is, after each swipe operation performed by the user, proportions of text content and image content in all content displayed during page swiping are approximately the same. Therefore, the mobile phone may determine the first proportion and the second proportion based on swipe history display data of the target page.

For example, the mobile phone may determine the first proportion and the second proportion of the target page based on a ratio of text content and image content in a picture of each frame to all content when the mobile phone displays the target page during previous swiping of the target page or in first preset duration before a current moment, or a ratio of text content and image content in some content displayed by the mobile phone on the target page to all content.

Based on this, in the second possible scenario, S601 may have the following four implementations:

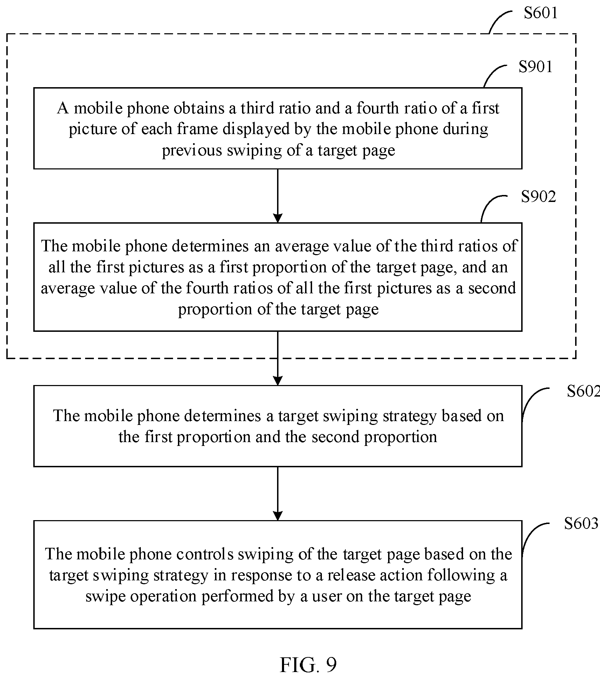

In a first implementation, with reference to FIG. 6, referring to FIG. 9, S601 may specifically include S901 and S902.

S901: The mobile phone obtains a third ratio and a fourth ratio of a first picture of each frame displayed by the mobile phone during previous swiping of the target page.

In this embodiment of this application, the previous swiping of the target page is a process from start of swiping to end of swiping of the target page prior to a current moment, which may be specifically a process between a swipe operation performed by the user and a finger lift-off action performed by the user.

The third ratio is a ratio of text content to all content (which may be specifically a ratio of an area of a region in which the text content is located to area of the first picture of each frame), and the fourth ratio is a ratio of image content to all content (which may be specifically a ratio of an area of a region in which the image content is located to the area of the first picture of each frame).

In this embodiment of this application, the mobile phone may obtain the third ratio and the fourth ratio by monitoring content of the first picture of each frame in real time to perform S901. Specific monitoring may be implemented in any feasible manner. This is not specifically limited in this application. Certainly, implementation of S901 may also be any other possible implementation. This is not specifically limited in this application.

After the mobile phone obtains the third ratio and the fourth ratio of the first picture of each frame during previous swiping of the target page, the mobile phone may infer, based on the third ratio and the fourth ratio of the first picture of each frame, the first proportion and the second proportion of the target page because the first picture of each frame is some content displayed on the target page, that is, perform S902.

S902: The mobile phone determines an average value of the third ratios of all the first pictures as the first proportion of the target page, and an average value of the fourth ratios of all the first pictures as the second proportion of the target page.

During swiping of the target page, the third ratio of the first picture of each frame displayed by the mobile phone can reflect to some extent a ratio of text content on the target page to all content, therefore, the average value of all the third ratios may be determined as the first proportion. Similarly, during swiping of the target page, the fourth ratio of the first picture of each frame displayed by the mobile phone can reflect to some extent a ratio of image content on the target page to all content, therefore, the average value of all the fourth ratios may be determined as the second proportion.

Based on the technical solutions corresponding to S901 and S902, the mobile phone may infer the first proportion and the second proportion of the target page by using the swipe history display data, that is, ratios of text content and image content in the first picture of each frame displayed by the mobile phone during previous swiping of the target page. Based on the two proportions, the mobile phone may subsequently obtain a target swiping strategy that best meets user requirements in a use scenario in which the user views the target page, thereby improving user experience.

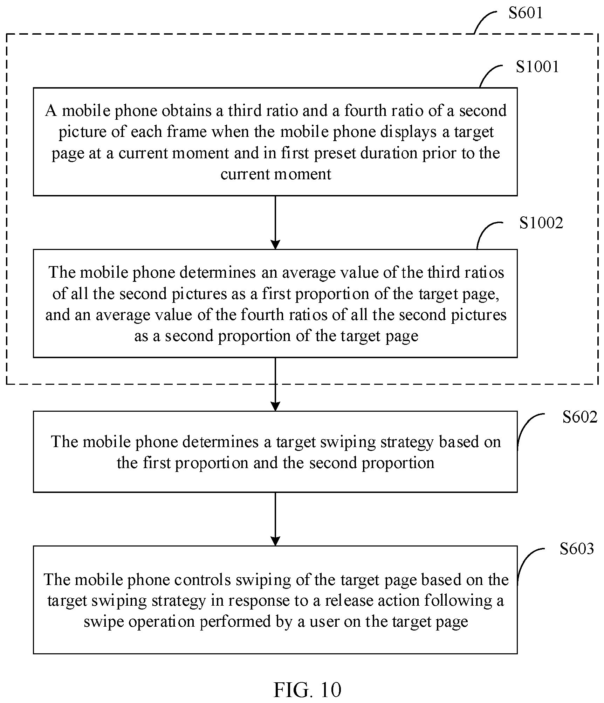

In a second implementation, with reference to FIG. 6, referring to FIG. 10, S601 may specifically include S1001 and S1002.

S1001: The mobile phone obtains a third ratio and a fourth ratio of a second picture of each frame when the mobile phone displays the target page at a current moment and in first preset duration prior to the current moment.

For example, the first preset duration may be 2s.

For an implementation in which the mobile phone obtains the third ratio and the fourth ratio of the second picture of each frame in S1001, reference may be made to the specific implementation of obtaining the third ratio and the fourth ratio of the first picture in S901 in the foregoing embodiment. Details are not described herein again.

S1002: The mobile phone determines an average value of the third ratios of all the second pictures as the first proportion of the target page, and an average value of the fourth ratios of all the second pictures as the second proportion of the target page.

For a reason that the first proportion and the second proportion may be obtained by using S1002, reference may be made to related descriptions after S902 in the foregoing embodiment. Details are not described herein again.

Based on the technical solutions corresponding to S1001 and S1002, the mobile phone may infer the first proportion and the second proportion of the target page by using the swipe history display data, that is, ratios of text content and image content in the second picture of each frame when the mobile phone displays the target page at a current moment and in first preset duration prior to the current moment. Based on the two proportions, the mobile phone may subsequently obtain a target swiping strategy that best meets user requirements in a use scenario in which the user views the target page, thereby improving user experience.

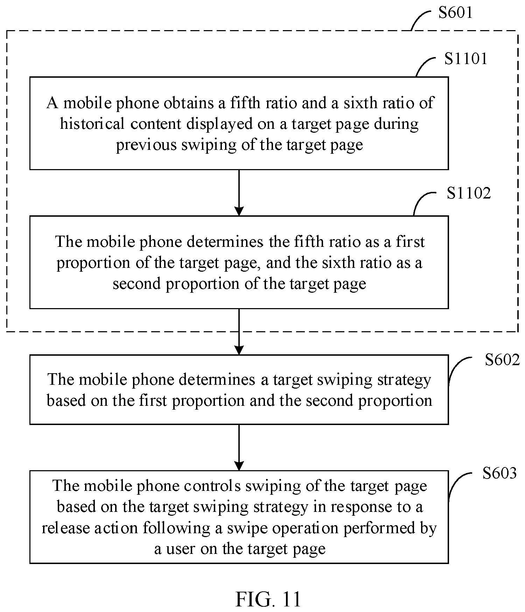

In a third implementation, with reference to FIG. 6, referring to FIG. 11, S601 may specifically include S1101 and S1102.

S1101: The mobile phone obtains a fifth ratio and a sixth ratio of historical content displayed on the target page during previous swiping of the target page.

For a definition of the previous swiping of the target page, reference may be made to related descriptions after S901 in the foregoing embodiment. Details are not described herein again.

The fifth ratio is a ratio of text content to the historical content (which may be specifically a ratio of an area of a region in which the text content is located to area of the historical content), and the six ratio is a ratio of image content to all content (which may be specifically a ratio of an area of a region in which the text content is located to area of the first picture of each frame).

In this embodiment of this application, the mobile phone may obtain the fifth ratio and the six ratio by monitoring all content displayed on the target page in real time to perform S1101. Specific monitoring may be implemented in any feasible manner. This is not specifically limited in this application. Certainly, implementation of S1101 may also be any other possible implementation. This is not specifically limited in this application.

S1102: The mobile phone determines the fifth ratio as the first proportion of the target page, and the six ratio as the second proportion of the target page.

Because distribution of text content and image content in different regions of the target page is similar or the same, a ratio of text content and a ratio of image content in some content on the target page may be equivalent to ratios of text content and image content on the entire target page.

Based on the technical solutions corresponding to S1101 and S1102, the mobile phone may infer the first proportion and the second proportion of the target page by using the swipe history display data, that is, ratios of text content and image content in the historical content displayed on the target page during previous swiping of the target page. Based on the two proportions, the mobile phone may subsequently obtain a target swiping strategy that best meets user requirements in a use scenario in which the user views the target page, thereby improving user experience.

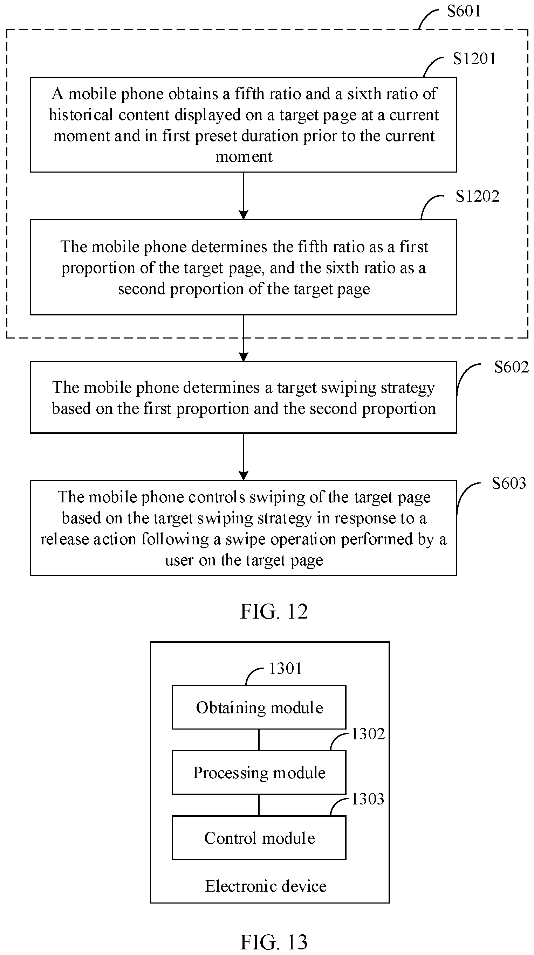

In a fourth implementation, with reference to FIG. 6, referring to FIG. 12, S601 may specifically include S1201 and S1202.

S1201: The mobile phone obtains a fifth ratio and a sixth ratio of historical content displayed on the target page at a current moment and in first preset duration prior to the current moment.

While S1201 is performed, for implementation of obtaining the fifth ratio and the sixth ratio by the mobile phone, reference may be made to related descriptions after S1101 in the foregoing embodiment. Details are not described herein again.

After the mobile phone obtains the fifth ratio and the sixth ratio of the historical content displayed during previous swiping of the target page, a ratio of text content and a ratio of image content are similar or the same because the historical content itself is some content of the target page. Therefore, the mobile phone may equate the fifth ratio of the historical content with the first proportion of the target page, and equate the sixth ratio of the historical content with the second proportion of the target page, that is, perform S1202.

S1202: The mobile phone determines the fifth ratio as the first proportion of the target page, and the six ratio as the second proportion of the target page.

Based on the technical solutions corresponding to S1201 and S1202, the mobile phone may infer the first proportion and the second proportion of the target page by using the swipe history display data, that is, ratios of text content and image content in the historical content displayed on the target page at the current moment and in the first preset duration prior to the current moment. Based on the two proportions, the mobile phone may subsequently obtain a target swiping strategy that best meets user requirements in a use scenario in which the user views the target page, thereby improving user experience.

It should be noted that in the second possible scenario, to avoid the problem of unsmooth swiping due to frequent changes in a swiping strategy during swiping of the target page, various implementations of S601 may be performed when the user does not perform a swipe operation and swiping of the target page ends. In this way, a same swiping strategy is used during each swiping of the target page, and thus swiping is relatively smooth, and user experience is relatively good.

Certainly, the foregoing two possible scenarios and possible implementations in each scenario are examples. In practice, the mobile phone may alternatively obtain the first proportion and the second proportion in any feasible manner. This is not specifically limited in this application.

S602: The mobile phone determines, based on the first proportion and the second proportion, a target swiping strategy.

The target swiping strategy may include a target initial velocity gain coefficient and a target friction coefficient.

In some possible implementations, the mobile phone may determine, based on the first proportion and the second proportion, the target initial velocity gain coefficient in the target swiping strategy according to a first preset formula, and the target friction coefficient in the target swiping strategy according to a second preset formula.

For example, the first preset formula is as follows.

$$v = v_t * p_t + v_p * p_p;$$

where v is a target initial velocity gain, $v_t$ is a text initial velocity gain, $v_p$ is an image initial velocity gain, $v_t$ is greater than $v_p$, $p_t$ is the first proportion, and $p_p$ is the second proportion.

The text initial velocity gain is an initial velocity gain that corresponds to a swipe curve with the best user experience in a text-only scenario and that is obtained from a human factors experiment. The image initial velocity gain is an initial velocity gain that corresponds to a swipe curve with the best user experience in a picture-only scenario and that is obtained from a human factors experiment.

For example, the second preset formula is as follows.

$$f = f_t * p_t + f_p * p_p;$$

where f is the target friction coefficient, $f_t$ is a text friction coefficient, $f_p$ is an image friction coefficient, and $f_p$ is greater than $f_t$. The text friction coefficient is a friction coefficient that corresponds to a swipe curve with the best user experience in a text-only scenario and that is obtained from a human factors experiment. The image friction coefficient is a friction coefficient that corresponds to a swipe curve with the best user experience in a picture-only scenario and that is obtained from a human factors experiment.

Based on the first preset formula, it may be concluded that a higher first proportion causes a larger initial velocity gain coefficient and a smaller target friction coefficient; and a higher second proportion causes a smaller initial velocity gain coefficient and a larger target friction coefficient. Alternatively, the initial velocity gain coefficient is positively correlated with the first proportion and negatively correlated with the second proportion; and the target friction coefficient is negatively correlated with the first proportion and positively correlated with the second proportion.

S603: The mobile phone controls, based on the target swiping strategy, swiping of the target page, in response to a release action following a swipe operation performed by a user on the target page.

After the user performs the swipe operation on the target page and touches up, the mobile phone may obtain, based on the target initial velocity gain coefficient and the target friction coefficient in the target swiping strategy, a corresponding swipe curve according to a preset swipe curve function. Then, swiping of the target page may be controlled based on the swipe curve, so as to display content that is not displayed on the target page. A swiping direction of the target page is the same as that of a swipe operation performed by the user on the target page.

Based on the technical solution provided in this embodiment of this application, the target swiping strategy for controlling swiping of the target page is determined based on ratios of text content and image content on the target page. In addition, the ratio of text content is positively correlated with the initial velocity gain coefficient and negatively correlated with the target friction coefficient, and the ratio of image content is negatively correlated with the initial velocity gain coefficient and positively correlated with the target friction coefficient. Therefore, the ratios of text content and image content on the target page directly affect an initial velocity, duration, and a distance for the mobile phone to control, based on the target swiping strategy, swiping of the target page. Specifically, more text content causes a higher initial swipe velocity of the target page, and longer swipe duration, and more image content causes a lower initial swipe velocity of the target page, and longer swipe duration. In this way, the target swiping strategy for the mobile to control swiping of the target page may be more in line with a use scenario in which the user views the target page, so that a swiping effect of the target page is more in line with an expectation of the user, thereby improving user experience.

It may be understood that to implement the foregoing functions, the electronic device includes corresponding hardware structures and/or software modules for performing the functions. A person skilled in the art may be easily aware that, in combination with example units and algorithm steps described in the embodiments disclosed in this specification, the embodiments of the present invention can be implemented by hardware or a combination of hardware and computer software. Whether a specific function is performed by hardware or hardware driven by computer software depends on a particular application and a design constraint of the technical solutions. A person skilled in the art may use different methods to implement the described functions for each particular application, but it should not be considered that the implementation goes beyond the scope of the embodiments of this application.

In the embodiments of this application, the foregoing electronic device may be divided into functional modules based on the foregoing method examples. For example, each functional module may be obtained through division for each corresponding function, or two or more functions may be integrated into one processing module. The integrated module may be implemented in a form of hardware, or may be implemented in a form of a software functional module. It should be noted that division into the modules in the embodiments of the present invention is an example, and is merely logical function division. During actual implementation, there may be another division manner.

When functional modules are divided by corresponding functions, referring to FIG. 13, an embodiment of this application further provides an electronic device. The electronic device may include an obtaining module 1301, a processing module 1302, and a control module 1303.

The obtaining module 1301 is configured to obtain a first proportion and a second proportion of a target page, where the first proportion is used to characterize a ratio of text content on the target page to all content on the target page, and the second proportion is used to characterize a ratio of image content on the target page to all the content on the target page. The processing module 1302 is configured to determine, based on the first proportion and the second proportion obtained by the obtaining module 1301, a target swiping strategy, where the target swiping strategy includes a target initial velocity gain coefficient and a target friction coefficient; the target initial velocity gain coefficient is positively correlated with the first proportion and negatively correlated with the second proportion; and the target friction coefficient is negatively correlated with the first proportion and positively correlated with the second proportion. The control module 1303 is configured to control, based on the target swiping strategy determined by the processing module 1302, swiping of the target page, in response to a release action following a swipe operation performed by a user on the target page.

In addition, any step of the display control method provided in the foregoing embodiment may be implemented through cooperation of the obtaining module 1301, the processing module 1302, and the control module 1303. Details are not described herein again.

With respect to the electronic device in the foregoing embodiment, a specific manner in which each module performs an operation is described in detail in the embodiment of the display control method in the foregoing embodiment. Details are not described herein again. For related beneficial effects, reference may be made to related beneficial effects of the foregoing display control method. Details are not described herein again.

An embodiment of this application further provides an electronic device. The electronic device includes a display, a memory, and one or more processors. The display and the memory are coupled to the processor. The memory stores computer program code, the computer program code includes computer instructions, and when the computer instructions are executed by the processor, the electronic device is enabled to perform the display control method provided in the foregoing embodiment. For a specific structure of the electronic device, reference may be made to a structure of the electronic device shown in FIG. 4.

An embodiment of this application further provides a computer-readable storage medium. The computer-readable storage medium includes computer instructions, and when the computer instructions are run on an electronic device, the electronic device is enabled to perform the display control method provided in the foregoing embodiment.

An embodiment of this application further provides a computer program product including executable instructions. When the computer program product runs on an electronic device, the electronic device is enabled to perform the display control method provided in the foregoing embodiment.

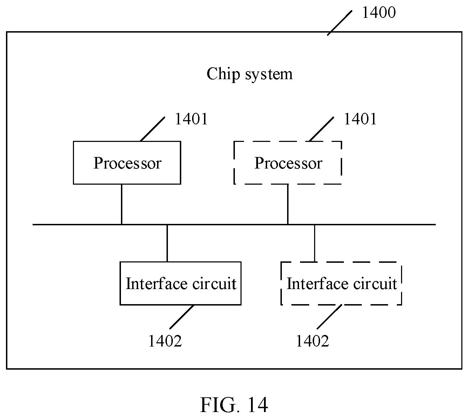

An embodiment of this application further provides a chip system. As shown in FIG. 14, the chip system 1400 includes at least one processor 1401, a memory, and at least one interface circuit 1402. The processor 1401 and the interface circuit 1402 may be connected to each other by using a line. For example, the interface circuit 1402 may be configured to receive a signal from another apparatus (such as a memory of an electronic device). For another example, the interface circuit 1402 may be configured to send a signal to another apparatus (for example, the processor 1401).

For example, the interface circuit 1402 may read instructions or a computer program stored in the memory, and send the instructions or the computer program to the processor 1401. When the instructions or the computer program are/is executed by the processor 1401, steps of the display control method provided in the foregoing embodiment may be performed. Certainly, the chip system may further include other discrete components. This is not specifically limited in this embodiment of this application.

It can be clearly learned by a person skilled in the art from the descriptions of the implementations that for convenience and brevity of description, only division into the functional modules is used as an example for description. In actual application, the functions may be allocated to different functional modules for implementation based on a requirement, that is, an internal structure of an apparatus is divided into different functional modules, to complete all or some of the functions described above.

In the several embodiments provided in this application, it should be understood that the disclosed apparatus/device and method may be implemented in another manner. For example, the apparatus/device embodiments described above are merely examples. For example, division into the modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, in other words, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in a form of a software product. The software product is stored in a storage medium and includes several instructions for enabling a device (which may be a single-chip microcomputer, a chip, or the like) or a processor (processor) to perform all or some of the steps of the methods described in the embodiments of this application. The foregoing storage medium includes various media that can store program code, for example, a USB flash drive, a removable hard disk, a read-only memory (read only memory, ROM), a random access memory (random access memory, RAM), a magnetic disk, or an optical disc.

The foregoing content is only specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

Claims

1. A display control method, applied to an electronic device, wherein the method comprises:

   obtaining, by the electronic device, a first proportion and a second proportion of a target page, wherein the first proportion is used to characterize a ratio of text content on the target page to all content on the target page, and the second proportion is used to characterize a ratio of image content on the target page to all the content on the target page;
   determining, by the electronic device based on the first proportion and the second proportion, a target swiping strategy, wherein the target swiping strategy comprises a target initial velocity gain coefficient and a target friction coefficient; the target initial velocity gain coefficient is positively correlated with the first proportion and negatively correlated with the second proportion; and the target friction coefficient is negatively correlated with the first proportion and positively correlated with the second proportion; and
   controlling, by the electronic device based on the target swiping strategy, swiping of the target page, in response to a release action following a swipe operation performed by a user on the target page.

2. The method according to claim 1, wherein the obtaining, by the electronic device, a first proportion and a second proportion of a target page comprises:

   obtaining, by the electronic device, a view tree of the target page;
   determining, by the electronic device based on feature information of leaf view nodes in the view tree, a first ratio of a sum of areas of corresponding views of all the leaf text view nodes to a total area of the target page, and a second ratio of a sum of areas of all the leaf image view nodes to the area of the target page, wherein the feature information comprises an area and a type of a view corresponding to a view node, and the type comprises a text view or an image view; the leaf view nodes are leaf nodes in the view tree, the leaf text view nodes are leaf nodes with the type of corresponding views being text views, and the leaf image view nodes are leaf nodes with the type of corresponding views being image views; and
   using, by the electronic device, the first ratio as the first proportion, and the second ratio as the second proportion.

3. The method according to claim 2, wherein the obtaining, by the electronic device, a first proportion and a second proportion of a target page comprises:

   obtaining, by the electronic device, swipe history display data of the target page; and
   determining, by the electronic device based on the swipe history display data of the target page, the first proportion and the second proportion of the target page.

4. The method according to claim 3, wherein the determining, by the electronic device based on the swipe history display data of the target page, the first proportion and the second proportion of the target page comprises:

   obtaining, by the electronic device, a third ratio and a fourth ratio of a first picture of each frame displayed by the electronic device during previous swiping of the target page, wherein the third ratio is a ratio of text content to all content, and the fourth ratio is a ratio of image content to all content; and
   determining, by the electronic device, an average value of the third ratios of all the first pictures as the first proportion, and an average value of the fourth ratios of all the first pictures as the second proportion.

5. The method according to claim 3, wherein the determining, by the electronic device based on the swipe history display data of the target page, the first proportion and the second proportion of the target page comprises:

   obtaining, by the electronic device, a third ratio and a fourth ratio of a second picture of each frame when the electronic device displays the target page at a current moment and in first preset duration prior to the current moment, wherein the third ratio is a ratio of text content to all content, and the fourth ratio is a ratio of image content to all content; and
   determining, by the electronic device, an average value of the third ratios of all the second pictures as the first proportion, and an average value of the fourth ratios of all the second pictures as the second proportion.

6. The method according to claim 3, wherein the determining, by the electronic device based on the swipe history display data of the target page, the first proportion and the second proportion of the target page comprises:

   obtaining, by the electronic device, a fifth ratio and a sixth ratio of historical content displayed on the target page during previous swiping of the target page, wherein the fifth ratio is a ratio of text content to the historical content, and the sixth ratio is a ratio of image content to the historical content; and

determining, by the electronic device, the fifth ratio as the first proportion, and the six ratio as the second proportion.

7. The method according to claim 3, wherein the determining, by the electronic device based on the swipe history display data of the target page, the first proportion and the second proportion of the target page comprises:

obtaining, by the electronic device, a fifth ratio and a sixth ratio of historical content displayed on the target page at a current moment and in first preset duration prior to the current moment, wherein the fifth ratio is a ratio of text content to the historical content, and the sixth ratio is a ratio of image content to the historical content; and
determining, by the electronic device, the fifth ratio as the first proportion, and the six ratio as the second proportion.

8. The method according to any one of claims 1 to 7, wherein the determining, by the electronic device based on the first proportion and the second proportion, a target swiping strategy comprises:

determining, by the electronic device based on the first proportion and the second proportion, a target initial velocity gain coefficient in the target swiping strategy according to a first preset formula; and
determining, by the electronic device based on the first proportion and the second proportion, a target friction coefficient in the target swiping strategy according to a second preset formula; wherein
the first preset formula is:

$$v = v_t * p_t + v_p * p_p;$$

wherein v is a target initial velocity gain, $v_t$ is a text initial velocity gain, $v_p$ is an image initial velocity gain, $v_t$ is greater than $v_p$, $p_t$ is the first proportion, and $p_p$ is the second proportion; and the second preset formula is:

$$f = f_t * p_t + f_p * p_p;$$

wherein f is the target friction coefficient, ft is a text friction coefficient, $f_p$ is an image friction coefficient, and $f_p$ is greater than ft.

9. An electronic device, comprising a display, a memory, and one or more processors, wherein the display and the memory are coupled to the processor; the memory stores computer program code, the computer program code comprises computer instructions, and when the computer instructions are executed by the processor, the electronic device is enabled to perform the display control method according to any one of claims 1 to 8.

10. A computer-readable storage medium, comprising computer instructions, wherein when the computer instructions are run on an electronic device, the electronic device is enabled to perform the display control method according to any one of claims 1 to 8.

v (pixel/s)

Velocity-time curve

(a)

s (pixel)

Distance-time curve

(b)

FIG. 1

FIG. 2

FIG. 3

Antenna 1

Antenna 2

**Mobile communication module 2G/3G/4G/5G [150]**

**Wireless communication module BT/WLAN/GNSS/NFC/IR/FM [160]**

Speaker [170A]

Receiver [170B]

Microphone [170C]

Headset jack [170D]

Audio module [170]

Displays 1~N [193]

Cameras 1~N [195]

Indicator [192]

Motor [191]

Key [190]

Internal memory [121]

SIM card interfaces 1~N [194]

External memory interface [120]

Processor [110]

Sensor module [180]

Gyroscope sensor

Magnetic sensor

Acceleration sensor

Optical proximity sensor

Fingerprint sensor

Temperature sensor

Touch sensor

Ambient light sensor

USB interface [130]

Charging input

Charging management module [140]

Power management module [141]

Battery [142]

FIG. 4

| Application layer | Camera | Calendar | Map | WLAN | Music | Messages |
| --- | --- | --- | --- | --- | --- | --- |
| | Gallery | Phone | Navigation | Bluetooth | Instant messaging | Video |
| | News | Wallpaper | ... | | | |

Framework layer

| Window manager | Content provider | Resource manager | ... |
| --- | --- | --- | --- |
| Notification manager | Camera service | View system | |
| Activity management service | Phone manager | | |
| Package manager | Audio service | | |

View system
- Overall view management module
  - Text view management module
  - Overall view management module

| System library | Surface manager | Media library | OpenGL ES | SGL | ... | Android runtime |
| --- | --- | --- | --- | --- | --- | --- |

| Hardware abstraction layer | Bluetooth module | Audio module | Camera module | Sensor module | ... |
| --- | --- | --- | --- | --- | --- |

Driver layer

| Sensor driver | Display driver | Audio driver |
| --- | --- | --- |
| Camera driver | ... | |

FIG. 5

A mobile phone obtains a first proportion and a second proportion of a target page  ⌐ S601

The mobile phone determines a target swiping strategy based on the first proportion and the second proportion  ⌐ S602

The mobile phone controls swiping of the target page based on the target swiping strategy in response to a release action following a swipe operation performed by a user on the target page  ⌐ S603

FIG. 6

| View 1 | |
|---|---|
| View 5 | View 6 |

View 2

| View 7 | View 9 |
|---|---|
| View 8 | |

View 3

| View 10 |
|---|

View 4

| View 11 | |
|---|---|
| View 12 | View 13 |

FIG. 7A

FIG. 7B

S601

S801

A mobile phone obtains a view tree of a target page

S802

The mobile phone determines, based on feature information of all leaf view nodes in the view tree, a first ratio of a sum of areas of views corresponding to all leaf text view nodes to a total area of the target page, and a second ratio of a sum of areas of all leaf image view nodes to the area of the target page

S803

The mobile phone uses the first ratio as a first proportion, and uses the second ratio as a second proportion

S602

The mobile phone determines a target swiping strategy based on the first proportion and the second proportion

S603

The mobile phone controls swiping of the target page based on the target swiping strategy in response to a release action following a swipe operation performed by a user on the target page

FIG. 8

S601

S901

A mobile phone obtains a third ratio and a fourth ratio of a first picture of each frame displayed by the mobile phone during previous swiping of a target page

S902

The mobile phone determines an average value of the third ratios of all the first pictures as a first proportion of the target page, and an average value of the fourth ratios of all the first pictures as a second proportion of the target page

S602

The mobile phone determines a target swiping strategy based on the first proportion and the second proportion

S603

The mobile phone controls swiping of the target page based on the target swiping strategy in response to a release action following a swipe operation performed by a user on the target page

FIG. 9

A mobile phone obtains a third ratio and a fourth ratio of a second picture of each frame when the mobile phone displays a target page at a current moment and in first preset duration prior to the current moment
— S1001

The mobile phone determines an average value of the third ratios of all the second pictures as a first proportion of the target page, and an average value of the fourth ratios of all the second pictures as a second proportion of the target page
— S1002

— S601

The mobile phone determines a target swiping strategy based on the first proportion and the second proportion
— S602

The mobile phone controls swiping of the target page based on the target swiping strategy in response to a release action following a swipe operation performed by a user on the target page
— S603

FIG. 10

S601

S1101

A mobile phone obtains a fifth ratio and a sixth ratio of historical content displayed on a target page during previous swiping of the target page

S1102

The mobile phone determines the fifth ratio as a first proportion of the target page, and the sixth ratio as a second proportion of the target page

S602

The mobile phone determines a target swiping strategy based on the first proportion and the second proportion

S603

The mobile phone controls swiping of the target page based on the target swiping strategy in response to a release action following a swipe operation performed by a user on the target page

FIG. 11

S601

S1201

A mobile phone obtains a fifth ratio and a sixth ratio of historical content displayed on a target page at a current moment and in first preset duration prior to the current moment

S1202

The mobile phone determines the fifth ratio as a first proportion of the target page, and the sixth ratio as a second proportion of the target page

The mobile phone determines a target swiping strategy based on the first proportion and the second proportion

S602

The mobile phone controls swiping of the target page based on the target swiping strategy in response to a release action following a swipe operation performed by a user on the target page

S603

FIG. 12

1301

Obtaining module

1302

Processing module

1303

Control module

Electronic device

FIG. 13

1400

Chip system

1401 1401

Processor | Processor |

Interface circuit | Interface circuit |

1402 1402

FIG. 14

## INTERNATIONAL SEARCH REPORT

| International application No. |
| --- |
| **PCT/CN2024/106583** |

| A. | CLASSIFICATION OF SUBJECT MATTER |
| --- | --- |

G06F 3/04847(2022.01)i

According to International Patent Classification (IPC) or to both national classification and IPC

| B. | FIELDS SEARCHED |
| --- | --- |

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS, VEN, CNTXT, WOTXT, USTXT, EPTXT, CNKI, IEEE: 滑动, 滚动, 拖动, 比例, 占比, 页面, 文本, 图像, 速度, 摩擦, 快慢, slide, roll, drag, proportion, page, text, image, velocity, friction, speed, slow, fast

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2013139097 A1 (INTERNATIONAL BUSINESS MACHINES CORP.) 30 May 2013 (2013-05-30)<br>description, paragraphs [0058]-[0093], and figures 1-11 | 1-10 |
| A | CN 105354292 A (DONGGUAN KUPAI SOFTWARE TECHNOLOGY CO., LTD.) 24 February 2016 (2016-02-24)<br>entire document | 1-10 |
| A | CN 111427504 A (BEIJING DAJIA INTERNET INFORMATION TECHNOLOGY CO., LTD.) 17 July 2020 (2020-07-17)<br>entire document | 1-10 |
| A | CN 117058565 A (HUIZHOU TCL MOBILE COMMUNICATION CO., LTD.) 14 November 2023 (2023-11-14)<br>entire document | 1-10 |
| A | WO 2023093458 A1 (HUAWEI TECHNOLOGIES CO., LTD.) 01 June 2023 (2023-06-01)<br>entire document | 1-10 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 September 2024** | **09 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/106583**

| Patent document cited in search report | | | Publication date (day/month/year) | Patent family member(s) | | | Publication date (day/month/year) |
|---|---|---|---|---|---|---|---|
| US | 2013139097 | A1 | 30 May 2013 | JP | 2013109693 | A | 06 June 2013 |
| | | | | JP | 5812821 | B2 | 17 November 2015 |
| | | | | US | 9046934 | B2 | 02 June 2015 |
| CN | 105354292 | A | 24 February 2016 | None | | | |
| CN | 111427504 | A | 17 July 2020 | US | 2021311622 | A1 | 07 October 2021 |
| | | | | US | 11474689 | B2 | 18 October 2022 |
| CN | 117058565 | A | 14 November 2023 | None | | | |
| WO | 2023093458 | A1 | 01 June 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311868160